**Europäisches Patentamt**

**European Patent Office**

**Office européen des brevets**

(19)

(11) Publication number: **0 132 573**
**A2**

(12) · **EUROPEAN PATENT APPLICATION**

(21) Application number: **84106895.0**

(22) Date of filing: **15.06.84**

(51) Int. Cl.⁴: **G 06 F 15/20**

(30) Priority: **21.06.83 JP 111457/83**

(43) Date of publication of application:
**13.02.85 Bulletin 85/7**

(84) Designated Contracting States:
**DE FR GB**

(71) Applicant: **DAIKIN INDUSTRIES, LIMITED**
**Shinhankyu-Building, 12-39, I-chome Umeda**
**Kita-ku Osaka-shi Osaka(JP)**

(72) Inventor: **Ishida, Koichi**
**5-40, Higashikusatsu 2-chome**
**Kusatsu-shi Shiga-ken(JP)**

(72) Inventor: **Yasui, Takashi**
**22-4 Minamidaira 7-chome**
**Hino-shi Tokyo(JP)**

(72) Inventor: **Okawa, Makoto**
**1000-5 Azaootani Okamoto-cho**
**Kusatsu-shi Shiga-ken(JP)**

(74) Representative: **Prüfer, Lutz H., Dipl.-Phys.**
**Harthauser Strasse 25d**
**D-8000 München 90(DE)**

(54) **Clip circuit of CRT display units.**

(57) A clip circuit (17) of a CRT display unit clips off, by means of a simple operation, the portion of a polygon (5) protruding from the three-dimensional space (4) when the polygon (5) is partially inserted into the three-dimensional space. More specifically, a window register (175) stores therein the data on the primary to tertiary planes forming the three-dimensional space, respectively comprised of a pair of planes. A host computer (10) provides three-dimensional coordinate data representing the respective vertexes of the polygon. An ALU (177) first extracts from the vectors constituting the polygon, a line segment existing in a field bounded by a pair of primary planes, according to the three-dimensional coordinate data from the window-register and the three-dimensional plane data from the host computer. Then, from the above stated line segment, the ALU (177) extracts a line segment existing in a field bounded by a pair of secondary planes and further extracts from this line segment, a line segment existing in a field bounded by a pair of tertiary planes, so that the other portions excluding the extracted line segments are clipped off. Accordingly, the unnecessary portions of a polygon can be clipped off only by one processing operation for each pair of primary to tertiaty planes, which means that only three processing operations are required.

./...

FIG.4

Clip Circuit of CRT Display Unit


The present invention relates to a clip circuit of a CRT display unit. More particularly, the present invention relates to an improvement of a clip circuit of a CRT display unit, by which the portions of a polygon protruding from the three-dimensional space can be clipped off when the polygon is partially inserted into the three-dimensional space represented on the screen of a CRT display unit.


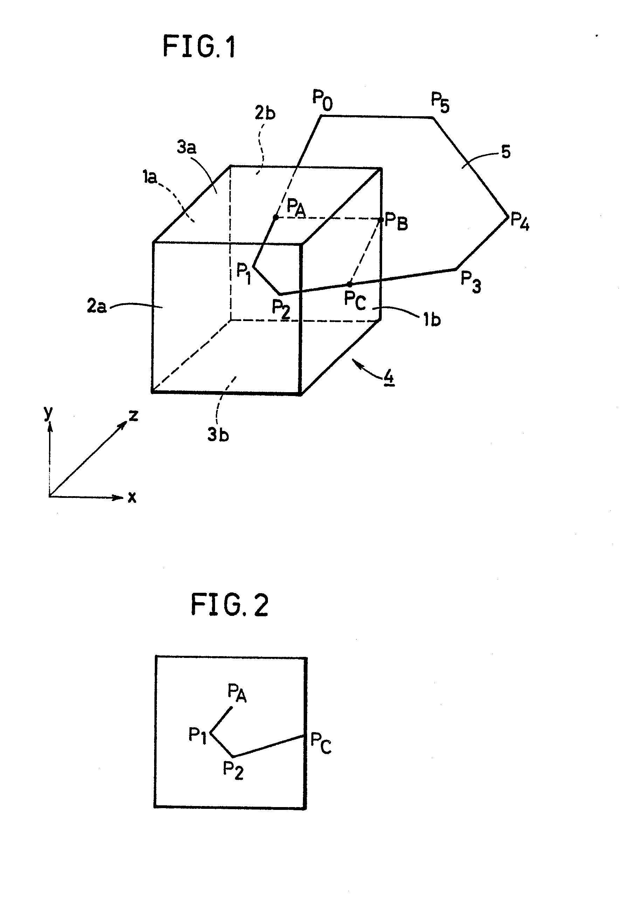

Figs. 1 and 2 are diagrams for explaining a method in which a polygon is partially inserted and represented in the three-dimensional space represented on the screen of a conventional color CRT display unit.

Referring to Fig. 1, in case where a polygon 5 is inserted in the three-dimensional space 4 by enlargement, parallel movement, rotation or the like, data on the coordinates $P_0$ $(x_0, y_0, z_0)$, $P_1$ $(x_1, y_1, z_1)$ ... $P_5$ $(x_5, y_5, z_5)$ representing the respective vertexes of the polygon 5 are generally supplied from a host computer to a color CRT display unit. Then, in the color CRT display unit, vectors connecting the vertexes $P_0$ to $P_5$ are

calculated so that the polygon 5 as shown in Fig. 1 is represented. In the polygon 5, the portions protruding from the three-dimensional space 4 are clipped off and only the portions existing in the three-dimensional space 4 are painted out in color.

For this purpose, points of intersection between the planes $1_a$, $1_b$, $3_a$, $3_b$, $2_a$, $2_b$ of x, y, z forming the three-dimensional space 4 and the respective vectors of the polygon 5 are calculated so that a new polygon is obtained by clipping so as to have the planes formed by these intersection points and the vertexes existing in the three-dimensional space 4. However, in this method, a closed polygon is not structured with respect to the planes 1a to 3b, if the polygon is viewed from the plane 2a for example, as shown in Fig. 2, and accordingly painting out cannot be perfectly performed. In other words, such a conventional method has a disadvantage that all the areas of the polygon 5 included in the three-dimensional space 4 cannot be painted out.

As one of the methods for dissolving such a disadvantage, "Computer Graphics Clipping System for Polygons" invented by Ivan E. Sutherland et al. (USP 3,816,726) is well known. In this computer aided graphics clipping system for polygons, it is individually determined concerning each of the planes 1a, 1b, 2a, 2b,

3a and 3b forming the three-dimensional space 4 shown in Fig. 1 whether each such plane intersects with the polygon 5, whereby the portions not included in the three-dimensional space are clipped. More specifically, according to the invention by Sutherland et al., the polygon 5 is clipped by the respective planes 1a, 1b, 2a, 2b, 3a and 3b. However, in this method, since it is necessary to clip the polygon 5 with respect to each of the planes 1a, 1b, 2a, 2b, 3a and 3b forming the three-dimensional space and hence six processing operations are required, complication of the processing operation cannot be avoided.

Therefore, a primary object of the present invention is to provide a clip circuit of a CRT display unit, in which the three-dimensional space is decomposed into primary to tertiary planes respectively comprising a pair of planes spaced by a fixed distance, and based on these primary to tertiary planes, line segments existing in the three-dimensional space are extracted from the vectors constituting a polygon so that a new polygon represented by the extracted line segments can be completely painted out.

According to the present invention, in order to perform clipping operation with respect to a part of a polygon existing in the three-dimensional space, three-dimensional coordinate data representing the respective vertexes of the polygon and three-dimensional plane data representing the primary to tertiary planes forming the three-dimensional space are provided as output. Based on these data, it is determined whether or not a start point and an end point of each vector constituting the polygon exist in a field bounded by each pair of planes forming the three-dimensional space, or whether or not any one of the vectors extends from the three-dimensional space to the outside or from the outside into the three-dimensional space. Then, from the vector extending from the three-dimensional space to the outside or from the outside into the three-dimensional space, a line segment existing in a field bounded by a pair of primary planes is extracted and from the line segment, a line segment existing in a field bounded by a pair of secondary planes is extracted. Furthermore, from the line segment, a line segment existing in a field bounded by a pair of tertiary planes is extracted. Then, the other portions excluding the extracted line segments are clipped.

Therefore, according to the present invention, only the line segments bounded by the pairs of primary to tertiary planes constituting the three-dimensional space are extracted and the other line segments are clipped off, and as a result the processing time can be shortened as compared with a conventional case as described above where a polygon is clipped with respect to each of the planes forming the three-dimensional space.

These objects and other objects, features, aspects and advantages of the present invention will become more apparent from the following detailed description of the present invention when taken in conjunction with the accompanying drawings.

Figs. 1 and 2 are diagrams for explaining a conventional method in which a polygon is inserted and represented in the three-dimensional space represented on the screen of a conventional color CRT display unit.

Fig. 3 is a schematic block diagram of a color CRT display unit to which the present invention is applied.

Fig. 4 is a concrete block diagram of an embodiment of the present invention.

Figs. 5A and 5B are diagrams showing the data to be stored in registers shown in Fig. 4.

Fig. 6 is a flow chart of a main routine for explaining a concrete operation of an embodiment of the present invention.

Figs. 7A to 7D are flow charts showing a clipping subroutine.

Figs. 8A, 8B, 9A and 9B are diagrams for explaining a start point and an end point at the time of clipping a polygon in the WZ planes.

Fig. 10 is a diagram for explaining the operation of clipping of a polygon in the WZ planes.

Fig. 11 is a diagram for explaining the operation of clipping of a polygon in the WY planes.

Fig. 12 is a diagram for explaining the operation of clipping of a polygon in the WX planes.

Figs. 13 to 15 are diagrams for explaining the operation of clipping of a vector which enters the three-dimensional space from the outside and goes out from the three-dimensional space.

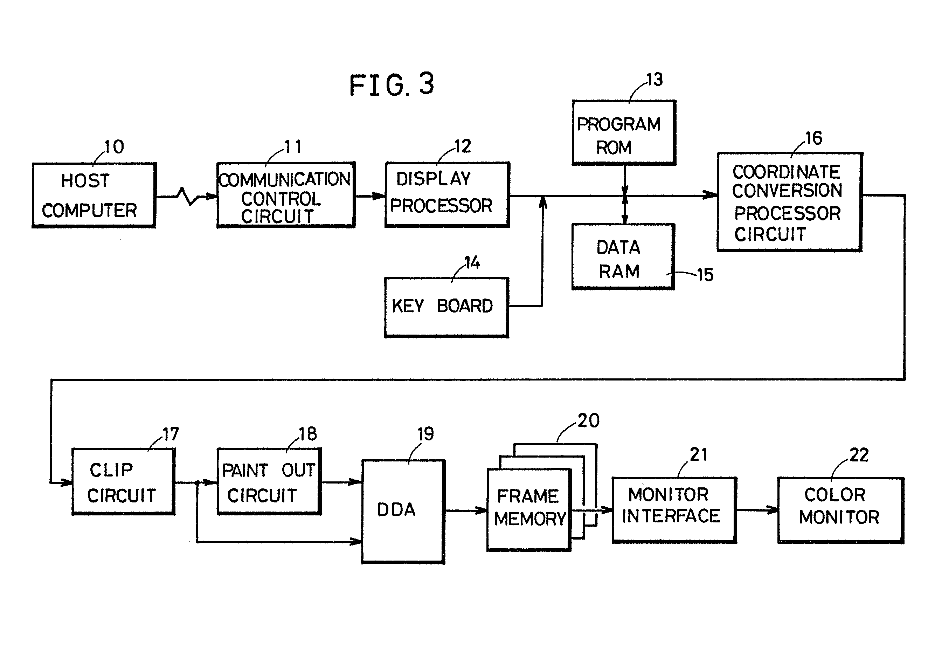

Fig. 3 is a schematic block diagram showing the whole structure of a color CRT display unit to which the present invention is applied. First, referring to Fig. 3, an outline of the structure and the operation of a color CRT display unit will be described. A communication control circuit 11 communicates with a host computer 10 to transmit and receive signals. This circuit 11 supplies the data from the host computer 10 to a display processor 12. The display processor 12 is loaded with the data

- 6 -

supplied from the host computer 10. In association with the display processor 12, a program ROM 13, a data RAM 15 and a keyboard 14 are provided. The program ROM 13 stores a necessary program for operation of the display processor 12. The keyboard 14 provides instruction for representing arbitrary data out of the data loaded in the display processor 12.

The data RAM 15 stores instruction and data for representation. A coordinate conversion processor circuit 16 multiplies by the necessary matrices the representation data $(x, y, z)$ provided from the display processor 12, in case of applying extension, reduction, rotation, parallel movement or the like, so that new data $(x', y', z')$ are provided. The data provided from the coordinate conversion processor circuit 16 are supplied to a clip circuit 17 which constitutes an outstanding feature of the present invention.

The clip circuit 17 clips vectors protruding from the three-dimensional space when a polygon is inserted in the three-dimensional space on the screen of the CRT display unit, so that only the vectors in the three-dimensional space are extracted. Output of the clip circuit 17 is supplied to a paint-out circuit 18 and a digital differential analyzer (DDA) 19 serving as a straight-line generating circuit. The paint-out circuit 18 provides line segments by decomposition into lines inside from the coordinates of the vertexes supplied from the clip circuit 17 in case of painting out a polygon, whereby data for painting out are obtained. The DDA 19 as the straight-line generating circuit calculates coordinates of the intermediate portions in a vector connecting a start point and an end point, based on the coordinates data of a start point and an end point provided from the clip circuit 17, so that the results of the calculation are developed in a frame memory 20 to form a straight line. The frame memory 20 stores the dots on a straight line generated by the DDA 19. The data of the dots stored in the frame memory 20 are supplied to a monitor interface 21. The monitor interface 21 reads the dot data from the frame memory 20 and supplies the dot data to a color monitor 22 together with a synchronizing signal. Accordingly, on the color monitor 22, the three-dimensional space and a clipped polygon are represented.

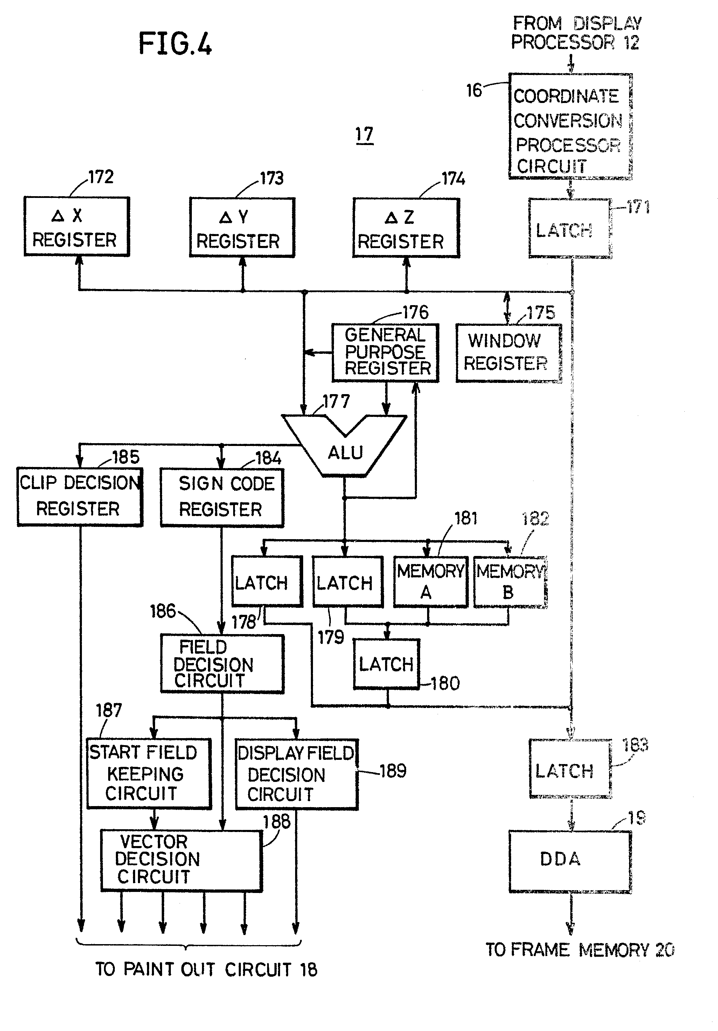

Fig. 4 is a more detailed block diagram of the clip circuit 17 shown in Fig. 3. In the following, the structure of the clip circuit 17 will be described. A latch 171 stores temporarily the data provided from the coordinate conversion processor circuit 16 shown in Fig. 3. A window register 175 stores the data $WX_{MIN}$, $WX_{MAX}$,

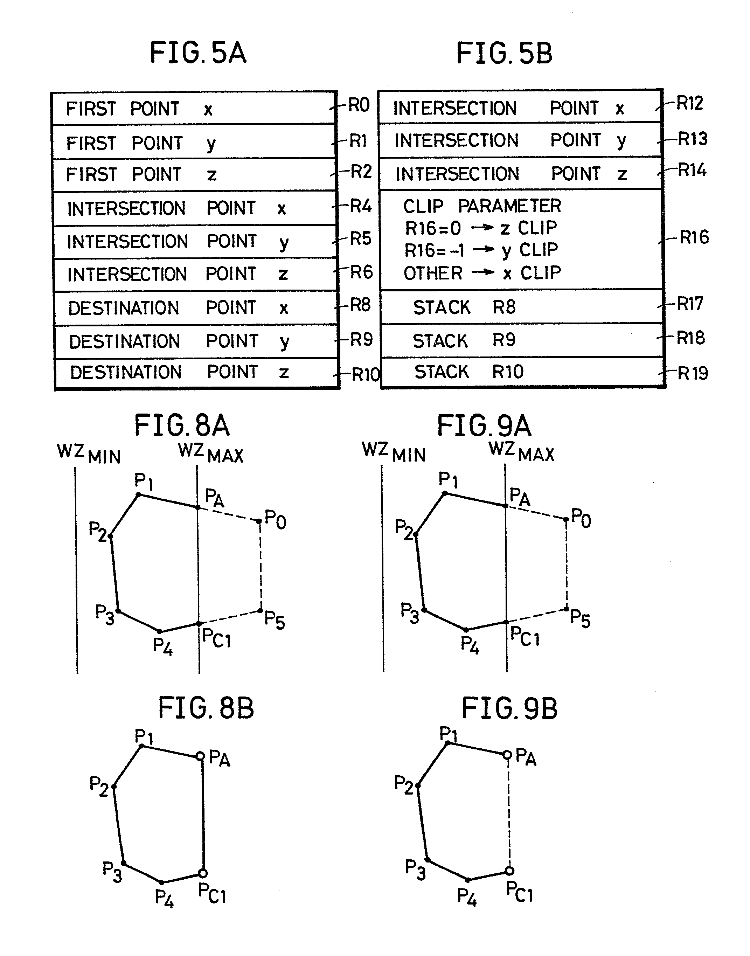

$WY_{MIN}$, $WY_{MAX}$, $WZ_{MIN}$, and $WZ_{MAX}$ of the respective pairs of primary to tertiary planes constituting the three-dimensional space 4 shown in Fig. 1 as described above. A $\Delta X$ register 172, a $\Delta Y$ register 173 and a $\Delta Z$ register 174 store respectively the data $\Delta x$, $\Delta y$, $\Delta z$ of x, y, z on the difference between a start point and an end point. A general purpose register 176 includes registers RO to R19 as described subsequently in connection with Figs. 5A and 5B. An arithmetic and logic unit (ALU) 177 performs addition, subtraction and logic operation. Particularly, the ALU 177 in this embodiment performs the following calculations in order to determine the magnitude relation between the coordinates of the vertexes ($x_i$, $y_i$, $z_i$) and the border lines of the three-dimensional space 4.

$$x_i - WX_{MIN}$$

$$x_i - WX_{MAX}$$

$$y_i - WY_{MIN}$$

$$y_i - WY_{MAX}$$

$$z_i - WZ_{MIN}$$

$$z_i - WZ_{MAX}$$

Sign codes obtained as the result of the above described calculations are stored in a sign code register 184.

The sign code register 184 stores sign codes obtained by the calculation in the ALU 177 and supplies the sign codes to a field decision circuit 186. The field decision circuit 186 decides based on the sign codes provided from the sign code register 184 whether or not the coordinates are contained in the fields of the primary to tertiary planes. Output of this field decision circuit 186 is supplied to a start field keeping circuit 187, a vector decision circuit 188 and a display field decision circuit 189. The start field keeping circuit 187 keeps a field obtained by a sign code as the result of the subtraction between a start point and a border line of the three-dimensional space 4. The vector decision circuit 188 decides the characteristic of a vector to provide output, based on a field determined by the field decision circuit 186 and a field kept in the start field keeping circuit 187. The display field decision circuit 189 decides whether or not the vectors constituting a polygon exist in the respective pairs of planes constituting the three-dimensional space. A clip decision register 185 decides based on the output from the ALU 177 whether or not line segments to be clipped exist in the respective vectors constituting the polygon 5.

To an output of the ALU 177, general purpose register 176, latches 178, 179 and 180 and memories (A) 181 and (B) 182 are connected. In the memories 181 and 182, data obtained as the result of calculation in the ALU 177 are stored and the stored data are provided therefrom to the above described DDA 19 shown in Fig. 3 through the latches 180 and 183.

Fig. 5A and 5B shows data stored in the general purpose register 176 shown in Fig. 4. Referring to Fig. 5A and 5B, in the registers R0 to R2 included in the general purpose register 176, the first coordinates of a vector represented by x, y, z are stored respectively. In the registers R4 to R6, the coordinates x, y, z of a point of intersection between the vector and the respective planes constituting the three-dimensional space are stored respectively. The registers R8 to R10 store respectively the coordinates x, y, z of a destination point. The registers R12 to R14 store respectively the coordinates x, y, z of an intersection point and the register R16 stores a clip parameter. If this clip parameter is 0, clipping in the z direction is performed. If the clip parameter is − 1, clipping in the y direction is performed, and in other case, clipping in the x direction is performed. the registers R17 to R19 are used as stacks of the destination points x, y, z stored in the register R8 to R10.

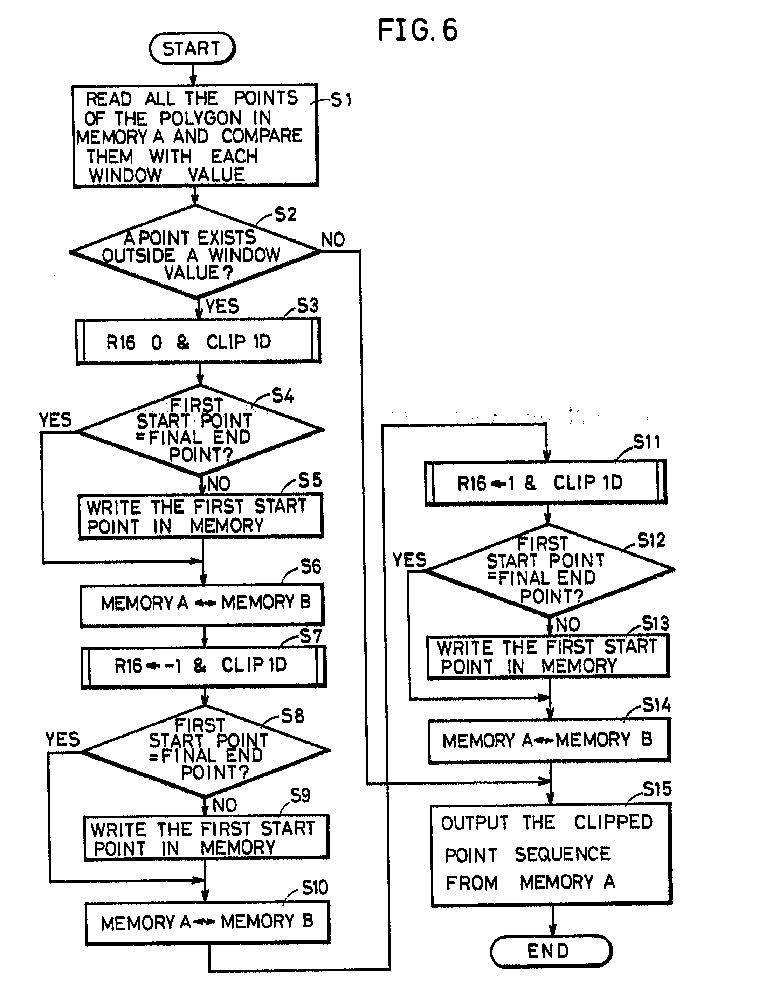

Fig. 6 shows a main routine for explaining the operation of an embodiment of the present invention.

- 11 -

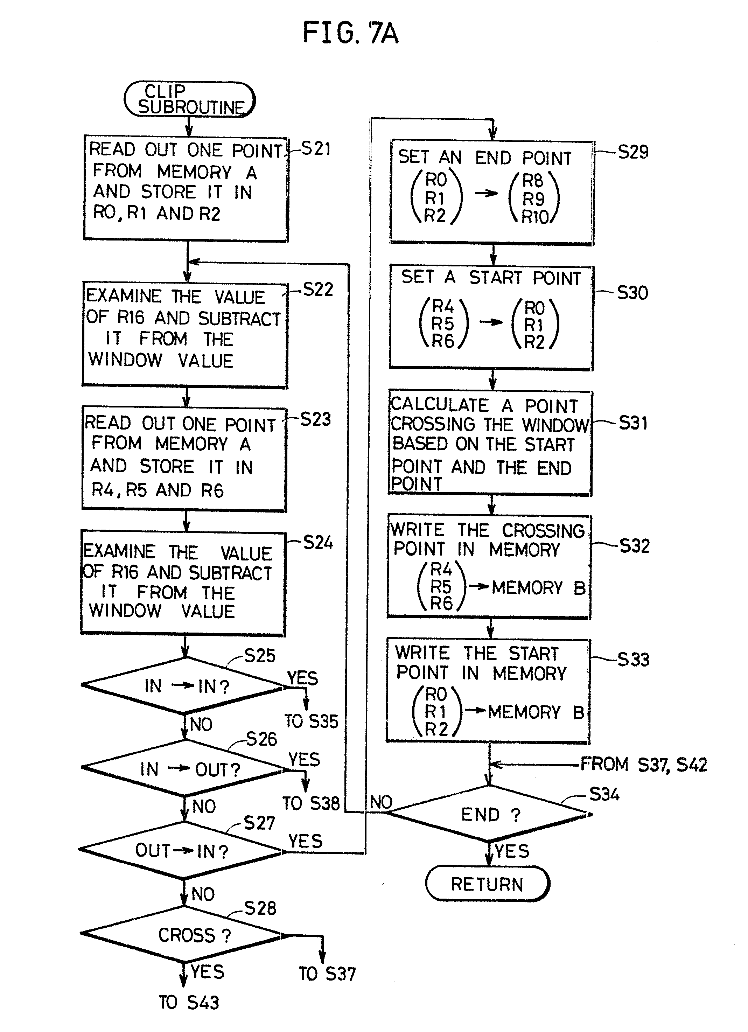

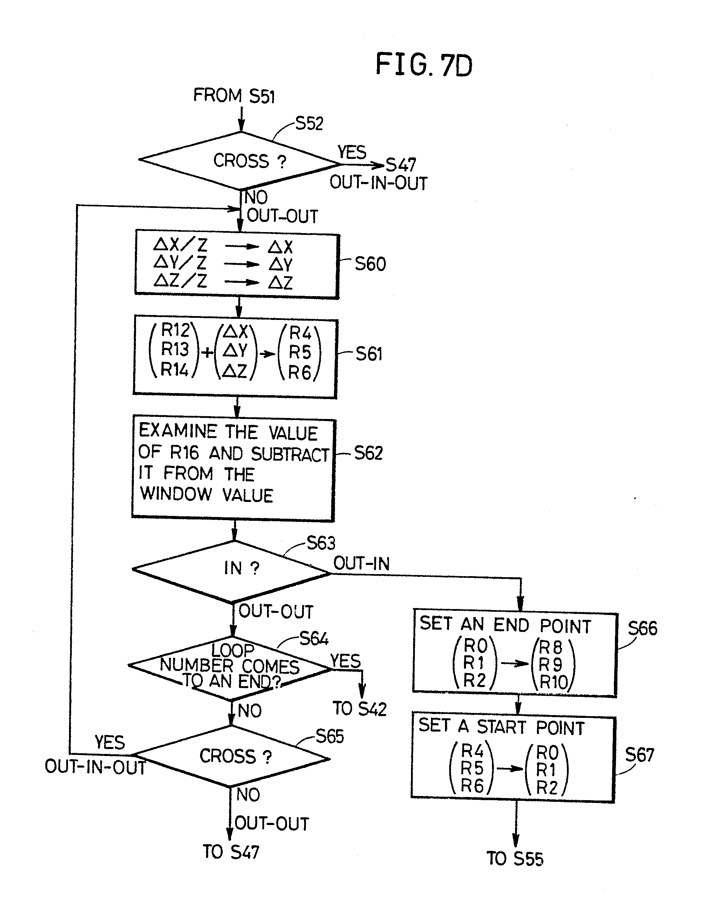

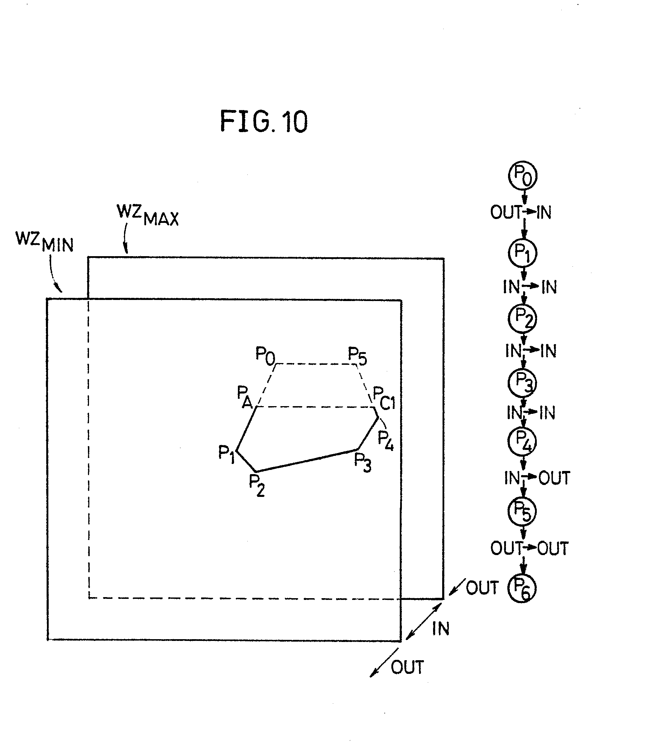

Figs. 7A to 7D are flow charts showing a subroutine for clipping. Figs. 8A to 15 are diagrams for facilitating the understanding of the operation of an embodiment of the present invention.

Now, referring to Figs. 3 to 15, a detailed operation of an embodiment of the present invention will be described. When instruction on a polygon to be represented is provided from a keyboard 14 shown in Fig. 3, data are supplied from a display processor 12 to the coordinate conversion processor circuit 16. Then, the coordinate conversion processor circuit 16 converts the data into the coordinates $P_0 (x_0, y_0, z_0)$ to $P_5 ( x_5, y_5, z_5)$ of the respective vertexes, which are supplied to the clip circuit 17. In the clip circuit 17, a latch 171 stores temporarily the coordinates of the vertexes $P_0$ to $P_5$. The ALU 177 stores in a memory 181 in the step S1 the coordinates $P_0$ to $P_5$ of the vertexes stored temporarily in the latch 171. Then, the ALU 177 compares the stored coordinates $P_0$ to $P_5$ of the vertexes and the window values of the respective planes of the three-dimensional space 4 stored in the window register 175 and at the same time it stores sign codes in the clip decision register 185. Subsequently in the step S2, according to a flag in the clip decision register 185, it is determined whether or not clipping is to be performed. More specifically, since

0132573

there is no need to clip the vectors when the respective vertexes $P_0$ to $P_5$ do not exist outside the respective planes of the three-dimensional space 4, that is, when the respective vertexes exist in the three-dimensional space 4, the ALU 177 reads in the step S15, the coordinates of the vertexes stored in the memory 181 so that the coordinates are supplied to the DDA 19 through the latches 180 and 183.

If it is determined in the step S2 that any one of the vertexes $P_0$ to $P_5$ exists outside the limits of the window values of the planes, the program proceeds to the step S3. In the step S3, 0 is set in the register 16 and the program proceeds to the subroutine for clipping shown in Fig. 7A.

In the subroutine for clipping, the coordinates ($x_0$, $y_0$, $z_0$) of the first vertex $P_0$ stored in the memory 181 are read out in the step S21 and stored respectively in the registers R0 to R2. In the step S22, the following calculation is performed, namely, subtraction between $z_0$ out of the coordinates of the vertex $P_0$ and the window values of the Z planes shown in Fig. 10 stored in the window register 175 is performed.

$$z_0 - WZ_{MAX}$$
$$z_0 - WZ_{MIN}$$

- 13 -

In Fig. 10, the vectors indicated by dotted lines exist on the OUT side of the plane $WZ_{MAX}$ and the vectors indicated by solid lines exist between the plane $WZ_{MAX}$ and the plane $WZ_{MIN}$, (namely on the IN side). Then, in the step S23, the coordinates $(x_1, y_1, z_1)$ of the next vertex $P_1$ is read out from the memory 181 so as to be stored in the registers R4 to R6. In the step S24, subtraction between $z_1$ out of the coordinates of the vertex $P_1$ and the window values of the Z planes is performed. Namely, the following calculation is performed

$$z_1 - WZ_{MAX}$$

$$z_1 - WZ_{MIN}$$

In the above described steps S21 to S24, calculation is performed for the purpose of determining a line segment existing in the limits of the window values of the Z planes of the three-dimensional space 4, from the Z component of a start point $P_0$ and an end point $P_1$ of the first vector $P_0P_1$, namely, for the purpose of determining a vector $P_AP_1$ shown in Fig. 10.

In the step S25, it is determined whether or not the Z component of the vector $P_0P_1$ is in the limits of the window values of the Z planes. Since the Z component of the vector $P_0P_1$ shown in Fig. 10 extends from the outside into the three-dimensional space 4, it is determined in the step S25 that the Z component is not in the state IN →IN, and it is determined in the step S26 that the Z component is not in the state IN →OUT. In the step S27, it is determined that the Z component is in the state OUT → IN.

In the step S29, the coordinates $(x_0, y_0, z_0)$ of the start point $P_0$ stored in the registers R0 to R2 are transferred to the registers R8 to R10. Subsequently, in the step S30, the coordinates $(x_1, y_1, z_1)$ of the end point $P_1$ stored in the registers R4 to R6 are transferred to the registers R0 to R2 so that the transferred coordinates constitute a start point $P_1$ for the next vector. Then, in the step S31, based on the coordinates of the start point $P_0$ and the end point $P_1$ stored in the registers R8 to R10 and R0 to R2, respectively, the coordinates of $(x_A, y_A, z_A)$ of a point $P_A$ of intersection with a window value of the Z planes are obtained to be stored in the registers R4 to R6. In the step S32, the coordinates $(x_A, y_A, z_A)$ of the intersection point $P_A$ stored in the registers R4 to R6 are transferred to the memory 182. In the step S33, the coordinates $(x_1, y_1, z_1)$ of the end point $P_1$ stored in the registers R0 to R2 are transferred to the memory 182. In the step S34, it is determined whether or not processing is completed for all the vertexes, and if the processing is not completed, the program returns to the step S22.

At this time in the registers R0 to R2, the coordinates $(x_1, y_1, z_1)$ of the end point $P_1$ of the first vector are stored in the above described step S30, as the coordinates of the start point $P_1$ for the next vector $P_1P_2$. In the step S22, in the same manner as described above, subtraction between the Z component $z_1$ of the start point $P_1$ and the window values of the Z planes is performed, as in the step S23, the coordinates $(x_2, y_2, z_2)$ of the end point $P_2$ of the second vector are read out from the memory 181 so as to be stored in the registers R4 to R6. Then, in the step S24, subtraction between the Z component $z_2$ of the end point $P_2$ and the window values of the Z planes is performed and in the step S25, it is determined that the vector $P_1P_2$ is within the limits of the window values of the Z planes (in the state IN → IN). Then, the program proceeds to the step S35. In the step S35, the coordinates $(x_1, y_1, z_1)$ of the start point $P_1$ stored in the registers R0 to R2 are stored in the memory 182 and in the step S36, the coordinates $(x_2, y_2, z_2)$ of the end point $P_2$ stored in the registers R4 to R6 are stored in the memory 182.

More specifically, the vector $P_1P_2$ exists only within the limits of the window values of the Z planes and does not intersect with the respective planes forming the three-dimensional space 4 and accordingly, in this case, without calculation of an intersection point, the coordinates $(x_2, y_2, z_2)$ of the end point $P_2$ are stored in the registers R0 to R2 in the step S37 so that the coordinates serve as a start point of the vector next $P_2P_3$.

In the step S34, it is determined that processing for all the vertexes is not completed, and the program returns to the step S22. In the step S22, the Z component $z_2$ of the start point of the next vector $P_2P_3$ and the window values of the Z planes are calculated and in the step S23, the coordinates $(x_3, y_3, z_3)$ of the end point $P_3$ are stored in the registers R4 to R6. Subsequently, in the step S24, subtraction between the Z component $z_3$ of the end point $P_3$ and the window values of the Z planes is performed and in the step S25, it is determined that the vector $P_2 P_3$ exists in the window value of the Z planes. Then, the operations in the above described steps S35 to S37 are repeated. More specifically, the coordinates of the start point $P_2$ stored in the registers R0 to R2 and the coordinates of the end point $P_3$ stored in the registers R4 to R6 are stored in the memory 182 and the coordinates of the end point $P_3$ are stored in the registers R0 to R2 so as to serve as the coordinates of a start point of the succeeding vector $P_3P_4$. In the step S34, it is determined that processing for all the vertexes is not completed, and it is determined in the steps S22 to S25 and S35 to S37 that the vector $P_3P_4$ exists in the window value of the Z planes, so that the coordinates of the start point $P_3$ and the end point $P_4$ of the vector $P_3P_4$ are stored in the memory 182.

Furthermore, in the steps S22 to S24, processing operation for the succeeding vector $P_4P_5$ is performed and in the step S26, it is determined that this vector $P_4P_5$ extends from the inside of the window value of the Z planes to the outside (namely, in the state IN → OUT). Then, the program proceeds to the step S38. In the step S38, the coordinates of the end point $P_5$ $(x_5, y_5, z_5)$ stored in the registers R4 to R6 are stored in the registers R8 to R10. In the step S39, based on the coordinates of the start point $P_4$ stored in the registers R0 to R2 and the coordinates of the end point $P_5$ stored in the registers R8 to R10, the coordinates $(x_{c1}, y_{c1}, z_{c1})$ of a point $P_{c1}$ of intersection with a window value of the Z planes are calculated so as to be stored in the registers R4 to R6. Then, in the step S40, the coordinates $(x_4, y_4, z_4)$ of the start point $P_4$ stored in the registers R0 to R2 are stored in the memory 182 and the coordinates $(x_{c1}, y_{c1}, z_{c1})$ of the intersection point $P_{c1}$ stored in the registers R4 to R6 are stored in the memory 182.

- 18 -

More specifically, since the vector $P_4P_5$ extends from the inside of the window value of the Z planes to the outside, only a component $P_4P_{cl}$ is left out of the vector, the other components of the vector being clipped off. Accordingly, only the coordinates of the start point $P_4$ and the intersection point $P_{cl}$ are stored in the memory 182. Then, in the step S42, the coordinates representing the end point $P_5$ of the vector $P_4P_5$ are transferred to the registers R0 to R2 so as to be the coordinates of a start point of the next vector $P_5P_6$.

If it is determined in the step S34 that processing for all the vertexes is not completed, the program returns to the step S22, where subtraction between the Z component $z_5$ of the vertex $P_5$ stored in the registers R0 to R2 and the window values of the Z planes is performed. Subsequently, in the step S23, the coordinates of the end point $P_0$ of the next vector (that is, the start point $P_0$ of the first vector $P_0P_1$) are read out from the memory 181 so as to be stored in the registers R4 to R6. In the step S24, subtraction is performed between the Z component $z_0$ of the end point $P_0$ and the window values of the Z planes. It is determined in the steps S 25 to S27 that the vector is not in any state as defined therein and in the step S28, it is determined whether or not the vector $P_5P_0$ crosses the three-dimensional space 4. Since the vector

- 19 -

$P_5P_0$ does not cross the window value of the Z planes, the program proceeds to the step S37, where the coordinates $(x_0, y_0, z_0)$ of the end point $P_0$ stored in the registers R4 to R6 are stored in the registers R0 to R2. Since the vector $P_5P_0$ does not cross the window value of the Z planes, the coordinates of the start point $P_5$ and the end point $P_0$ of this vector $P_5P_0$ are not stored in the memory 182. Accordingly, this vector $P_5P_0$ is clipped.

Thus, clipping in the Z planes is performed for the respective vectors constituting the vertexes $P_0$ to $P_5$ of the polygon 5 and then, in the step S34, it is determined that clipping is completed and the program proceeds to the main routine shown in Fig. 6.

Since a polygon has generally a closed figure, a start point and an end point need coincide with each other. Accordingly, processing for making a start point and an end point coincide with each other is needed. For example, if a vertex $P_3$ shown in Fig. 8A is a first start point, the vertex $P_3$ becomes also a final end point since the vertex $P_3$ exists in a field bounded by the plane $WZ_{MIN}$ and the plane $WZ_{MAX}$. As a result, a polygon $P_AP_1P_2P_3P_4P_{c1}$ bounded by the planes $WZ_{MIN}$ and $XZ_{MAX}$ as shown in Fig. 8B is obtained.

However, if the vertex $P_0$ is a first start point as shown in Fig. 9A, line segments outside the field bounded

- 20 -

by the plane $WZ_{MIN}$ and the plane $WZ_{MAX}$ are clipped since this vertex $P_0$ exists outside this field.  Then, the vertex $P_A$ becomes a first start point and the vertex $P_{c1}$ becomes a final end point and as a result, as shown in Fig. 9B, the first start point $P_A$ and the final end point $P_{c1}$ do not coincide with each other.

Accordingly, in the step S4 of the main routine, it is determined whether or not a point of coincidence between a first start point and a final end point exists in the field bounded by the plane $WZ_{MIN}$ and the plane $WZ_{MAX}$.  Then, if the first start point and the final end point coincide with each other as shown in Fig. 8A, the program proceeds to the step S6.  If the first start point and the final start point do not coincide with each other as shown in Fig. 9A, the program proceeds to the step S5. In the step S5, the final end point $P_0$ applied till then is made to be a passing point and the coordinates of the first start point are made to be the coordinates of the final end point.

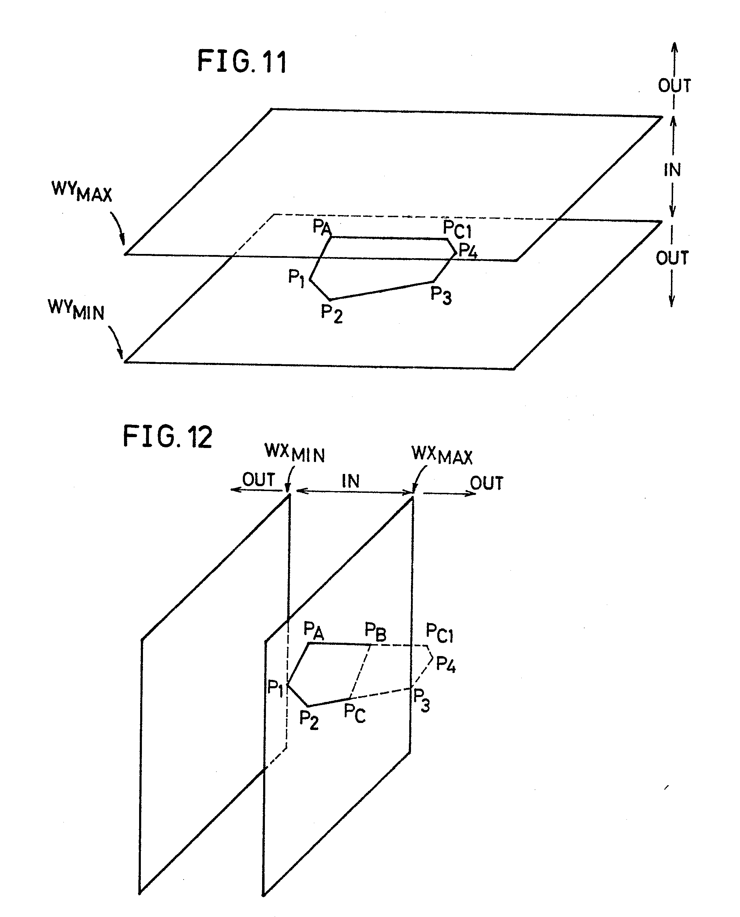

In the step S6, all the data stored in the memory 182 are transferred to the memory 181.  Then, in the step S7, clipping in the Y planes is performed.  A polygon clipped with respect to the Z planes as described above is represented by the vertexes $P_A$, $P_1$, $P_2$, $P_3$, $P_4$ and $P_{c1}$ as shown in Fig. 11.  Since this polygon exists between the Y planes $WY_{MAX}$ and $WY_{MIN}$, clipping in the Y planes is not applied. More specifically, in the clipping subroutine shown in Figs. 7A to 7D, it is determined in the step S25 that the vectors $P_A P_1$, $P_1 P_2$, $P_2 P_3$, $P_3 P_4$, $P_4 P_{c1}$ and $P_{c1} P_A$ are all in the state IN → IN and the operations in the steps S35 to S37 are repeated.

When processing in the Y planes as described above is completed, the program returns to the step S8 of the main routine, where the first start point and the final end point of the polygon in the Y planes coincide with each other. If the first start point and the final end point do not coincide with each other, processing for making them coincide is applied in the step S9. Since clipping is not performed in the Y planes as described above, it is determined in the step S8 that the first start point and the final end point coincide with each other, and in the step S10, all the data stored in the memory 182 are transferred to the memory 181. Then, the program proceeds to the step S11, where processing with respect to the X planes is performed as shown in Fig. 12. As to the polygon shown in Fig. 12, a portion shown by the solid lines exists in a field between the X planes $WX_{MAX}$ and $WX_{MIN}$ (namely, in the state IN) and a portion shown by the dotted lines is outside the plane $WX_{MAX}$ (namely, in the state OUT). Accordingly, clipping is not applied to the

- 22 -

vectors $P_AP_1$ and $P_1P_2$, while clipping is applied to a vector $P_cP_3$ taken out of the vector $P_2P_3$ by connecting a point of intersection with the plane $WX_{MAX}$ and the end point $P_3$ as well as to the vectors $P_3P_4$, $P_4P_{c1}$ and $P_{c1}P_B$. As a result, a polygon represented by the newly obtained vectors $P_AP_1$, $P_1P_2$, $P_2P_c$, $P_cP_B$ and $P_BP_A$ is finally obtained.

When processing with respect to the X planes is completed as described above, the program returns again to the step S12 of the main routine, where it is determined whether or not the first start point and the final end point of the polygon newly obtained by clipping in the X planes coincide with each other. If the points do not coincide processing for making them coincide with each other is applied in the step S13, and in the step S14, all the data stored in the memory 182 are transferred to the memory 181. Then, in the step S15, the data stored in the memory 181 are read out so as to be supplied to the DDA19 through the latches 180 and 183.

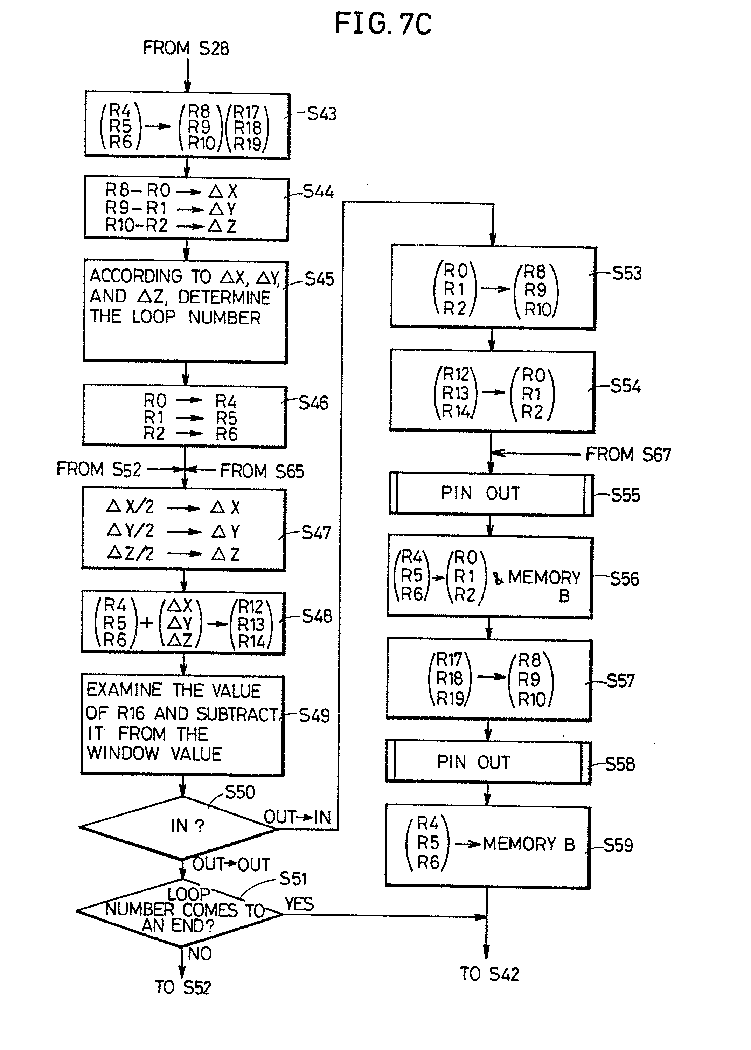

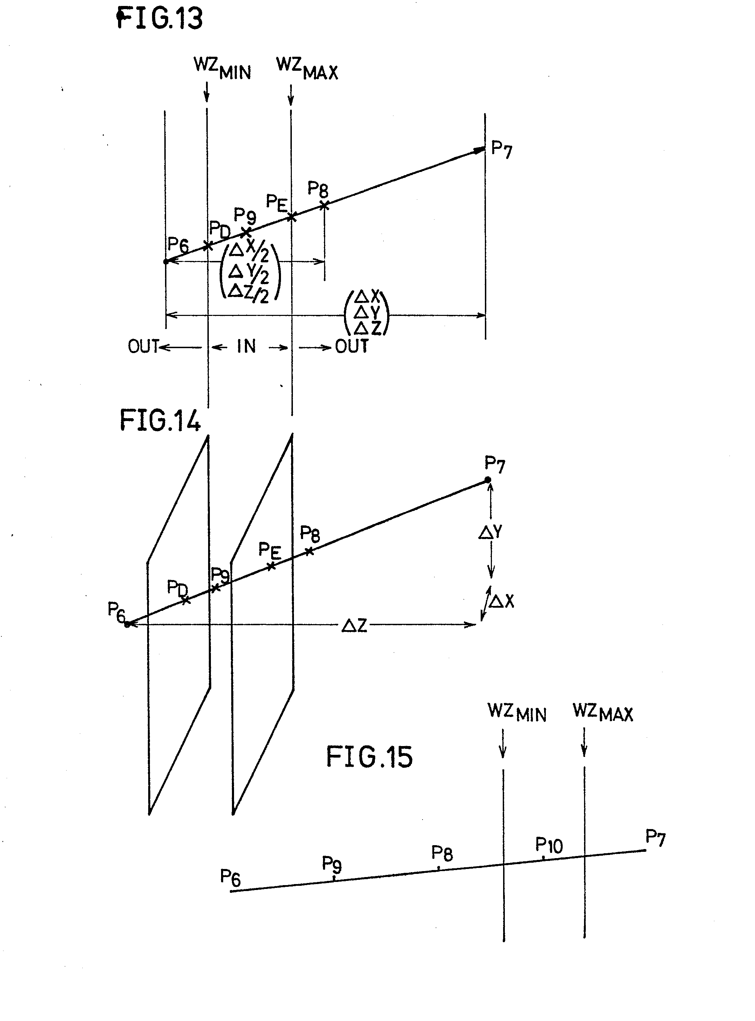

Now, description will be made of an operation in case where a vector $P_6P_7$ enters the three-dimensional space 4 from the outside and goes out again as shown in Figs. 13 to 15. In the case of such a vector, it is determined in the step S28 shown in Fig. 7A that the vector crosses the three-dimensional space 4, and the program proceeds to the flow shown in Fig. 7C. More specifically, in the step S43, the coordinates of an end point $P_7$ stored in the registers R4 to R6 are transferred to the registers R8 to R10 and R17 to R19. In the step S44, the coordinates of a start point $P_6$ stored in the registers R0 to R2 are subtracted from the coordinates of the end point $P_7$ stored in the registers R8 to R10, so that $\Delta X$, $\Delta Y$ and $\Delta Z$ are obtained to be stored in the $\Delta X$ register 172, the $\Delta Y$ register 173 and the $\Delta Z$ register 174, respectively. Then, in the step S45, the number of loops is determined according to the values of $/\Delta X/$, $/\Delta Y/$ and $/\Delta Z/$ stored in the registers 172, 173 and 174, respectively. More specifically, if the values of $/\Delta X/$, $/\Delta Y/$ and $/\Delta Z/$ are relatively large, the number of loops is increased.

In the step S46, the coordinates of the start point stored in the registers R0 to R2 are transferred to the registers R4 to R6. In the step S47, the differences between the coordinates of the start point $P_6$ and the end point $P_7$ are divided by two to obtain $\Delta X/2$, $\Delta Y/2$ and $\Delta Z/2$, respectively, which are stored in the $\Delta X$ register 172, $\Delta Y$ register 173 and $\Delta Z$ register 174, respectively. Then, in the step S48, the coordinates of the start point $P_6$ stored in the registers R4 to R6 are added to the contents of the registers 172, 173 and 174 and the results of addition are stored in the registers R12, R13 and R14.

More specifically, in the step S48, the vector $P_6P_7$ is divided by two and the coordinates of a point $P_8$ obtained by the division are calculated so as to be stored in the registers R12, R13 and R14. In an example shown in Fig. 13, the end point $P_7$ is more distant from the three-dimensional space 4 as compared with the start point $P_6$ and as a result the point $P_8$ obtained by the division exists outside the three-dimensional space 4.

In the step S49, subtraction is made between the Z component of a vector $P_6P_8$ and the window values of the Z planes and, in the step S50, it is determined whether the vector $P_6P_8$ is in the state OUT - IN or in the state OUT → OUT. In the example shown in Fig. 13, the vector $P_6P_8$ is in the state OUT - OUT, and accordingly, the program proceeds to the step S51, where it is determined whether looping is performed by the number set in the step S45. When it is determined that looping is not completed by the set number and it is determined in the step S52 that intersection with the three-dimensional space 4 is made, the program returns to the step S47. In the step S47, $\Delta X/2$, $\Delta Y/2$ and $\Delta Z/2$ stored in the $\Delta X$ register 172, $\Delta Y$ register 173 and $\Delta Z$ register 174, respectively, are further divided by two and, in the step S37, the values obtained by the division are added to the coordinates of the start point $P_6$ stored in the registers R4 to R6, so that the values obtained by the addition are stored in the registers R12 to R14. More specifically, in this step S48, the divided vector $P_6P_8$ is further divided by two to obtain a point $P_9$. Then, in the step S49, subtraction is made between the Z component of a vector $P_6P_9$ and the window values of the Z planes, so that it is determined in the step S50 whether or not the vector $P_6P_9$ enters the three-dimensional space 4. In the example shown in Fig. 13, the vector $P_6P_9$ is in the state OUT → IN and as a result, the program proceeds to the step S53.

In the step S53, the coordinates of the start point $P_6$ stored in the registers R0 to R2 are transferred to the registers R8 to R10, and in the step S54, the coordinates of the end point $P_9$ stored in the registers R12 to R14 are transferred to the registers R0 to R2. Then, in the step S55, the coordinates of a point $P_D$ of intersection between the vector $P_6P_9$ and the plane $WZ_{MIN}$ are calculated so as to be stored in the registers R4 to R6. In the step S56, the coordinates of the intersection point $P_D$ are stored in the registers R0 to R2 and at the same time stored in the memory 182.

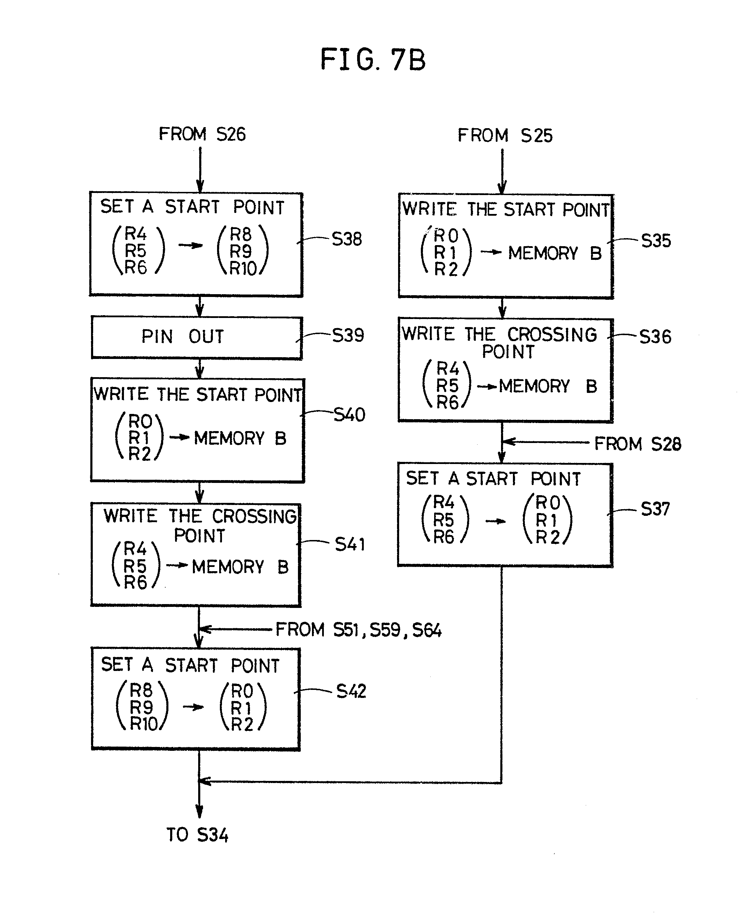

Furthermore, in the step S57, the coordinates of an end point $P_7$ of the other divided vector stored in the registers R17 to R19 are stored in the registers R8 to R10. Then, the coordinates of a point $P_E$ of intersection between the other vector $P_9P_7$ and the plane $WZ_{MAX}$ of the three-dimensional space 4 are calculated to be stored in the registers R4 to R6. In the step S59, the coordinates of the intersection point $P_E$ are transferred to the memory 182. Subsequently, the program proceeds again to the step S42 shown in Fig. 7B, where the coordinates of the end point $P_7$ stored in the registers R8 to R10 are stored in the registers R0 to R2. Such a sequence of processing operation as described above is also performed with respect to the Y planes and the X planes as shown in Fig. 14.

In case where the coordinates of the start point $P_6$ are of more distance from the three-dimensional space 4 as compared with the end point $P_7$ as shown in Fig. 15, the operations in the steps S43 to S51 are performed. In the example shown in Fig. 15, the vector $P_6P_8$ obtained by division of the vector $P_6P_7$ still exists outside the plane $WZ_{MIN}$ of the three-dimensional space 4. However, if this vector $P_6P_8$ is further divided to obtain a new vector $P_6P_9$, the new vector $P_6P_9$ also does not cross the three-dimensional space 4. For this reason, in the example shown in Fig. 15, the vector $P_6P_7$ is divided to obtain a new vector $P_8P_7$ and this vector $P_8P_7$ is further divided to obtain a new vector $P_{10}P_7$. Accordingly, $\Delta X/2$,

$\Delta Y/2$ and $\Delta Z/2$ are added to the coordinates to the point $P_8$ obtained by division of the vector $P_6 P_7$ so that the coordinates of a new point $P_{10}$ are calculated to be stored in the registers R4 to R6. Except for the above described point, the vector processing operation in Fig. 15 is the same as the processing operation shown in Fig. 13.

Although the present invention has been described and illustrated in detail, it is clearly understood that the same is by way of illustration and example only and is not to be taken by way of limitation, the spirit and scope of the present invention being limited only by the terms of the appended claims.

CLAIMS

1. A clip circuit of a CRT display unit for clipping, out of a polygon, portions protruding from the three-dimensional space represented in the CRT screen at the time of inserting partially said polygon into said three-dimensional space, said clip circuit comprising:

coordinate providing means (16) for providing three-dimensional coordinate data representing the respective vertexes of said polygon,

three-dimensional plane data providing means (175) for providing data on the primary to tertiary planes forming said three-dimensional space, said primary to tertiary planes being respectively comprised of a pair of planes spaced by a predetermined distance,

determining means (S2) for determining, based on the three-dimensional coordinate data from said coordinate providing means and the data from said three-dimensional plane data providing means, whether the respective vectors represented by said three-dimensional coordinate data and constituting said polygon exist between the pairs of said three-dimensional planes,

first extracting means (S3) responsive to the determination of nonexistence of the vectors in the pairs of said three-dimensional plane by said determining means,

- 1 -

for extracting from the respective vectors, a line segment existing in the pair of said primary planes based on the respective vectors and the data on the pair of said primary planes provided from said three-dimensional plane data providing means, so that coordinate data representing said line segment are provided as output and the other line segments excluding said line segments are clipped off,

second extracting means (S7) responsive to the output from said first extracting means, for extracting a line segment existing in the pair of said secondary planes, from said line segment extracted by said first extracting means, and based on the data on the pair of secondary planes provided from said three-dimensional plane data providing means, so that the coordinate data representing said line segment are provided as the output and the other line segments excluding said line segment are clipped off,

third extracting means (S11) responsive to the output from said second extracting means, for extracting a line segment existing in the pair of said tertiary planes, from said line segment extracted by said second extracting means, and based on the data on the pair of tertiary planes provided from said three-dimensional plane data providing means, so that the coordinate data representing said line segment are provided as the output and the other line segments excluding said line segment are clipped off, and

output means (S15) responsive to said first to third extracting means for providing the coordinate data representing said line segments extracted by said first to third extracting means.


2. A clip circuit of a CRT display unit in accordance with claim 1, wherein

said first extracting means comprises:

first vector calculating means (S21 to S27) responsive to the output from said determining means, for calculating, based on the respective vectors and connecting the vertexes of said polygons and the data on the pair of said primary planes, a vector extending from the outside of a field bounded by the pair of said primary planes into said field and a vector extending from the inside of said field to the outside, out of the respective vectors connecting the vertexes of said polygon.

first intersection point calculating means (S31 and S39) responsive to the output from said first vector calculating means, for calculating, based on said calculating vectors and the data on the pair of said primary planes, intersection points at which said calculated vectors cross either of the pair of said primary planes and

primary polygon extracting means (S32, S33, S35 to S37 and S40 to S42) responsive to the output from said first intersection point calculating means, for extracting, based on said calculating intersection points and the data on the pair of said primary planes, a polygon represented by the line segments connecting said calculated intersection points and the vectors existing in the field bounded by the pair of said primary planes,

said second extracting means comprises:

second vector calculating means (S21 to S27) responsive to the output from said primary polygon extracting means, for calculating, based on said respective vectors and the data on the pair of said secondary planes, a vector extending from the outside of a field bounded by the pair of said secondary planes into said field and a vector extending from the inside of said field to the outside, out of the vectors connecting the vertexes of said polygon extracted by said primary polygon extracting means,

second intersection point calculating means (S31, and S39) responsive to the output from said second vector calculating means, for calculating, based on said calculated vectors and the data on the pair of said

- 4 -

secondary planes, intersection points at which said calculated vectors cross either of the pair of said secondary planes, and

secondary polygon extracting means (S32, S33, S35 to S37 and S40 to S42) responsive to the output from said second intersection point calculating means, for extracting, based on said calculated intersection points and the data on the pair of secondary planes, a polygon represented by the line segments connecting said calculated intersection points and the vectors existing in the field bounded by the pair of said secondary planes, and

said third extracting means comprises:

third vector calculating means (S21 to S27) responsive to the output from said secondary polygon extracting means, for calculating, based on said respective vectors and the data on the pair of said tertiary planes, a vector extending from the outside of a field bounded by the pair of said tertiary planes into said field and a vector extending from the inside of said field to the outside, out of the vectors connecting the vertexes of said polygon extracted by said secondary polygon extracting means,

third intersection point calculating means (SS1 and S39) responsive to the output from said third vector calculating means, for calculating, based on said calculated vectors and the data on the pair of said tertiary planes, intersection points at which said calculated vectors cross either of the pair of said tertiary planes, and

tertiary polygon extracting means (SS2, S33, S35 to S37 and S40 to S42) responsive to the output from said third intersection point calculating means, for extracting, based on said calculated intersection points and the data on the pair of said tertiary planes, a polygon represented by the line segments connecting said calculated intersection points and the vectors existing in the field bounded by the pair of said tertiary planes.

3. A clip circuit of a CRT display unit in accordance with claim 2, wherein

said first vector calculating means comprises means (S24 to S27) for determining, based on the differences between the coordinates data representing the respective vertexes of said polygon and the data representing the respective planes of the pair of said primary planes, whether the vectors connecting the respective vertexes exist in the field bounded by the pair of said primary planes or extend from the inside of said field to the outside or extend from the outside into said field,

said second vector calculating means comprises means (S24 to S27) for determining, based on the differences between the coordinate data representing the respective vertexes of said polygon extracted by said primary polygon extracting means and the data representing the respective planes of the pair of said secondary planes, whether the vectors connecting the respective vertexes exist in the field bounded by the pair of said secondary planes or extend from the inside of said field to the outside or extend from the outside into said field, and

said third vector calculating means comprises means (S24 to S27) for determining, based on the differences between the coordinate data representing the respective vertexes of said polygon extracted by said secondary polygon extracting means and the data representing the respective planes of the pair of said tertiary planes, whether the vectors connecting the respective vertexes exist in the field bounded by the pair of said tertiary planes or extend from the inside of said field to the outside or extend from the outside into said field.

4. A clip circuit of a CRT display unit in accordance with claim 2, wherein

said primary polygon extracting means comprises means (S5) for substituting any one of said calculated intersection points for the first start point coordinates and the final end point coordinates in case where the first start point coordinates and the final end point coordinates of said extracted polygon do not exist in the field bounded by the pair of said primary planes,

said secondary polygon extracting means comprises means (S9) for substituting any one of said calculated intersection points for the first start point coordinates and the final end point coordinates in case where the first start point coordinates and the final end point coordinates of said extracted polygon do not exist in the field bounded by the pair of said secondary planes, and

said tertiary polygon extracting means comprises means (S13) for substituting any one of said calculated intersection points for the first start point coordinates and the final end point coordinates in case where the first start point coordinates and the final end point coordinates of said extracted polygon do not exist in the field bounded by the pair of said tertiary planes.

0132573

FIG.1

FIG.2

## FIG. 3

FIG.4

FROM DISPLAY PROCESSOR 12

16 — COORDINATE CONVERSION PROCESSOR CIRCUIT

17

172 — ΔX REGISTER

173 — ΔY REGISTER

174 — ΔZ REGISTER

171 — LATCH

176 — GENERAL PURPOSE REGISTER

175 — WINDOW REGISTER

177 — ALU

185 — CLIP DECISION REGISTER

184 — SIGN CODE REGISTER

181 — LATCH / LATCH / MEMORY A / MEMORY B — 182

178 / 179 — LATCH

180 — LATCH

186 — FIELD DECISION CIRCUIT

187 — START FIELD KEEPING CIRCUIT

189 — DISPLAY FIELD DECISION CIRCUIT

188 — VECTOR DECISION CIRCUIT

183 — LATCH

19 — DDA

TO FRAME MEMORY 20

TO PAINT OUT CIRCUIT 18

## FIG.5A

| | |
|---|---|
| FIRST POINT x | R0 |
| FIRST POINT y | R1 |
| FIRST POINT z | R2 |
| INTERSECTION POINT x | R4 |
| INTERSECTION POINT y | R5 |
| INTERSECTION POINT z | R6 |
| DESTINATION POINT x | R8 |
| DESTINATION POINT y | R9 |
| DESTINATION POINT z | R10 |

## FIG.5B

| | |
|---|---|
| INTERSECTION POINT x | R12 |
| INTERSECTION POINT y | R13 |
| INTERSECTION POINT z | R14 |
| CLIP PARAMETER<br>R16=0 → z CLIP<br>R16=−1 → y CLIP<br>OTHER → x CLIP | R16 |
| STACK R8 | R17 |
| STACK R9 | R18 |
| STACK R10 | R19 |

## FIG.8A

## FIG.9A

## FIG.8B

## FIG.9B

0132573

## FIG.6

```
        ( START )
            │
            ▼
┌───────────────────────┐ S1
│ READ ALL THE POINTS   │
│ OF THE POLYGON IN     │
│ MEMORY A AND COMPARE  │
│ THEM WITH EACH        │
│ WINDOW VALUE          │
└───────────────────────┘
            │
            ▼
         ╱──────╲  S2
        ╱ A POINT ╲            NO
       ╱ EXISTS    ╲─────────────────┐
       ╲ OUTSIDE A ╱                 │
        ╲ WINDOW  ╱                  │
         ╲VALUE?╱                    │
            │ YES                    │
            ▼        S3              │
┌───────────────────────┐           │
│ R16  0  &  CLIP 1D    │           │
└───────────────────────┘           │
            │                        │
            ▼                        │
  YES    ╱──────╲  S4                │
┌────────╱ FIRST ╲                   │
│        ╲ START POINT ╱             │
│         ╲=FINAL END╱               │
│          ╲ POINT? ╱                │
│            │ NO    S5              │
│            ▼                       │
│ ┌───────────────────────┐         │
│ │ WRITE THE FIRST START │         │
│ │ POINT IN MEMORY       │         │
│ └───────────────────────┘         │
│            │                       │
└───────────►│                       │
             ▼        S6             │
┌───────────────────────┐           │
│ MEMORY A ←→ MEMORY B  │           │
└───────────────────────┘           │
            │                        │
            ▼        S7              │
┌───────────────────────┐           │
│ R16 ← -1  &  CLIP 1D  │           │
└───────────────────────┘           │
            │                        │
            ▼                        │
  YES    ╱──────╲  S8                │
┌────────╱ FIRST ╲                   │
│        ╲ START POINT ╱             │
│         ╲=FINAL END╱               │
│          ╲ POINT? ╱                │
│            │ NO    S9              │
│            ▼                       │
│ ┌───────────────────────┐         │
│ │ WRITE THE FIRST START │         │
│ │ POINT IN MEMORY       │         │
│ └───────────────────────┘         │
│            │                       │
└───────────►│                       │
             ▼        S10            │
┌───────────────────────┐           │
│ MEMORY A ←→ MEMORY B  │           │
└───────────────────────┘           │
            │                        │
            └───────────┐            │
                        │            │
```

```
    ┌───────────────────┐
    │                   │◄──────────────────┐
    ▼                                        │
┌───────────────────────┐ S11                │
│ R16 ← 1  &  CLIP 1D   │                    │
└───────────────────────┘                    │
            │                                 │
            ▼                                 │
  YES    ╱──────╲  S12                        │
┌────────╱ FIRST ╲                            │
│        ╲ START POINT ╱                      │
│         ╲=FINAL END╱                        │
│          ╲ POINT? ╱                         │
│            │ NO    S13                      │
│            ▼                                │
│ ┌───────────────────────┐                  │
│ │ WRITE THE FIRST START │                  │
│ │ POINT IN MEMORY       │                  │
│ └───────────────────────┘                  │
│            │                                │
└───────────►│                                │
             ▼        S14                     │
┌───────────────────────┐                    │
│ MEMORY A ←→ MEMORY B  │                    │
└───────────────────────┘                    │
            │                                 │
            ▼        S15                      │
┌───────────────────────┐                    │
│ OUTPUT THE CLIPPED    │                    │
│ POINT SEQUENCE        │                    │
│ FROM MEMORY A         │                    │
└───────────────────────┘                    │
            │
            ▼
         (  END  )
```

0132573

# FIG. 7A

7/12

0132573

# FIG. 7B

FROM S26

SET A START POINT
$\begin{pmatrix} R4 \\ R5 \\ R6 \end{pmatrix} \rightarrow \begin{pmatrix} R8 \\ R9 \\ R10 \end{pmatrix}$ — S38

PIN OUT — S39

WRITE THE START POINT
$\begin{pmatrix} R0 \\ R1 \\ R2 \end{pmatrix} \rightarrow$ MEMORY B — S40

WRITE THE CROSSING POINT
$\begin{pmatrix} R4 \\ R5 \\ R6 \end{pmatrix} \rightarrow$ MEMORY B — S41

FROM S51, S59, S64

SET A START POINT
$\begin{pmatrix} R8 \\ R9 \\ R10 \end{pmatrix} \rightarrow \begin{pmatrix} R0 \\ R1 \\ R2 \end{pmatrix}$ — S42

TO S34

FROM S25

WRITE THE START POINT
$\begin{pmatrix} R0 \\ R1 \\ R2 \end{pmatrix} \rightarrow$ MEMORY B — S35

WRITE THE CROSSING POINT
$\begin{pmatrix} R4 \\ R5 \\ R6 \end{pmatrix} \rightarrow$ MEMORY B — S36

FROM S28

SET A START POINT
$\begin{pmatrix} R4 \\ R5 \\ R6 \end{pmatrix} \rightarrow \begin{pmatrix} R0 \\ R1 \\ R2 \end{pmatrix}$ — S37

# FIG. 7C

FROM S28

$\begin{pmatrix} R4 \\ R5 \\ R6 \end{pmatrix} \longrightarrow \begin{pmatrix} R8 \\ R9 \\ R10 \end{pmatrix} \begin{pmatrix} R17 \\ R18 \\ R19 \end{pmatrix}$ — S43

$\begin{aligned} R8-R0 &\longrightarrow \triangle X \\ R9-R1 &\longrightarrow \triangle Y \\ R10-R2 &\longrightarrow \triangle Z \end{aligned}$ — S44

ACCORDING TO $\triangle X$, $\triangle Y$, AND $\triangle Z$, DETERMINE THE LOOP NUMBER — S45

$\begin{aligned} R0 &\longrightarrow R4 \\ R1 &\longrightarrow R5 \\ R2 &\longrightarrow R6 \end{aligned}$ — S46

FROM S52 ——→ ←—— FROM S65

$\begin{aligned} \triangle X/2 &\longrightarrow \triangle X \\ \triangle Y/2 &\longrightarrow \triangle Y \\ \triangle Z/2 &\longrightarrow \triangle Z \end{aligned}$ — S47

$\begin{pmatrix} R4 \\ R5 \\ R6 \end{pmatrix} + \begin{pmatrix} \triangle X \\ \triangle Y \\ \triangle Z \end{pmatrix} \longrightarrow \begin{pmatrix} R12 \\ R13 \\ R14 \end{pmatrix}$ — S48

EXAMINE THE VALUE OF R16 AND SUBTRACT IT FROM THE WINDOW VALUE — S49

S50

IN ? — OUT→IN

OUT→OUT

S51
LOOP NUMBER COMES TO AN END? — YES

NO

TO S52

$\begin{pmatrix} R0 \\ R1 \\ R2 \end{pmatrix} \longrightarrow \begin{pmatrix} R8 \\ R9 \\ R10 \end{pmatrix}$ — S53

$\begin{pmatrix} R12 \\ R13 \\ R14 \end{pmatrix} \longrightarrow \begin{pmatrix} R0 \\ R1 \\ R2 \end{pmatrix}$ — S54

FROM S67

PIN OUT — S55

$\begin{pmatrix} R4 \\ R5 \\ R6 \end{pmatrix} \longrightarrow \begin{pmatrix} R0 \\ R1 \\ R2 \end{pmatrix}$ & MEMORY B — S56

$\begin{pmatrix} R17 \\ R18 \\ R19 \end{pmatrix} \longrightarrow \begin{pmatrix} R8 \\ R9 \\ R10 \end{pmatrix}$ — S57

PIN OUT — S58

$\begin{pmatrix} R4 \\ R5 \\ R6 \end{pmatrix} \longrightarrow$ MEMORY B — S59

TO S42

# FIG. 7D

FROM S51

S52
CROSS ?
YES → S47
OUT-IN-OUT

NO
OUT-OUT

$$\Delta X/Z \longrightarrow \Delta X$$
$$\Delta Y/Z \longrightarrow \Delta Y$$
$$\Delta Z/Z \longrightarrow \Delta Z$$
S60

$$\begin{pmatrix} R12 \\ R13 \\ R14 \end{pmatrix} + \begin{pmatrix} \Delta X \\ \Delta Y \\ \Delta Z \end{pmatrix} \rightarrow \begin{pmatrix} R4 \\ R5 \\ R6 \end{pmatrix}$$
S61

EXAMINE THE VALUE OF R16 AND SUBTRACT IT FROM THE WINDOW VALUE
S62

S63
IN ?
OUT-IN

OUT-OUT

S64
LOOP NUMBER COMES TO AN END?
YES
TO S42

NO

YES
OUT-IN-OUT

S65
CROSS ?

NO
OUT-OUT

TO S47

SET AN END POINT
$$\begin{pmatrix} R0 \\ R1 \\ R2 \end{pmatrix} \rightarrow \begin{pmatrix} R8 \\ R9 \\ R10 \end{pmatrix}$$
S66

SET A START POINT
$$\begin{pmatrix} R4 \\ R5 \\ R6 \end{pmatrix} \rightarrow \begin{pmatrix} R0 \\ R1 \\ R2 \end{pmatrix}$$
S67

TO S55

0132573

# FIG.10

FIG.11

FIG.12

0132573

# FIG.13

WZ$_{MIN}$   WZ$_{MAX}$

P$_7$

P$_8$

P$_E$

P$_9$

P$_D$

P$_6$

$\begin{pmatrix} \triangle X/2 \\ \triangle Y/2 \\ \triangle Z/2 \end{pmatrix}$

$\begin{pmatrix} \triangle X \\ \triangle Y \\ \triangle Z \end{pmatrix}$

OUT ← | ← IN → | → OUT

# FIG.14

P$_7$

P$_8$

P$_E$

P$_9$

P$_D$

P$_6$

$\triangle Y$

$\triangle X$

$\triangle Z$

# FIG.15

WZ$_{MIN}$   WZ$_{MAX}$

P$_6$   P$_9$   P$_8$   P$_{10}$   P$_7$